# FASCICULE DE BREVET EUROPEEN

(11) **EP 2 946 184 B1**
(45) Date de publication et mention de la délivrance du brevet: **29.12.2021**
(21) Numéro de dépôt: 14700408.9
(22) Date de dépôt: 14.01.2014
(51) Int. Cl.: G01N 25/48, G01K 17/04, G21C 19/40

(54) **CALORIMETRE DIFFERENTIEL A MESURE DE FLUX DE CHALEUR**
WÄRMEFLUSS MESSENDES DIFFERENZIALKALORIMETER
HEAT FLOW MEASURING DIFFERENTIAL CALORIMETER

(30) Priorité: 16.01.2013 FR 1350360
(43) Date de publication de la demande: 25.11.2015
(73) Titulaire: Commissariat à l'Énergie Atomique et aux Énergies Alternatives, 75015 Paris (FR); KEP NUCLEAR, 30200 Bagnols sur Cèze (FR)
(72) Inventeur: JOSSENS, Guillaume, F-69100 Villeurbanne (FR); MATHONAT, Christophe, 69100 Villeurbanne (FR); HUBINOIS, Jean-Charles, F-21000 Dijon (FR); GODOT, Alain, F-21121 Darois (FR); BACHELET, Franck, F-21000 Dijon (FR)
(74) Mandataire: Brevalex
(86) Numéro de dépôt international: PCT/EP2014/050607
(87) Numéro de publication internationale: WO 2014/111382

(56) Documents cités:
- FR-A1- 2 516 237
- FR-A5- 2 062 446
- US-A1- 2011 164 652
- D S Bracken ET AL: "Application Guide to Safeguards Calorimetry", , 1 janvier 2002 (2002-01-01), pages 1-62, XP055076732, Extrait de l'Internet: URL:http://www.lanl.gov/orgs/n/n1/docs/la_ 13867.pdf [extrait le 2013-08-27]
- S.R. GUNN: "Radiometric calorimetry: A review", NUCLEAR INSTRUMENTS AND METHODS, vol. 29, no. 1, 1 septembre 1964 (1964-09-01), pages 1-24, XP055076749, ISSN: 0029-554X, DOI: 10.1016/0029-554X(64)90002-3
- None

## Description

### DOMAINE TECHNIQUE

La présente invention concerne de manière générale la mesure de puissance thermique de matières radioactives.

Elle fait partie des techniques de mesure non destructive et non intrusive de la puissance thermique d'échantillon contenant des matières radioactives.

Elle concerne plus particulièrement la mesure de la puissance thermique d'échantillon contenant des matières radioactives en faible quantité, réparties de façon inhomogène dans un conteneur qui peut être de gros volume.

### ÉTAT DE LA TECHNIQUE ANTÉRIEURE

La calorimétrie est une technique bien connue pour la quantification de radioéléments dont le Tritium (³H) et le Plutonium (Pu) contenus dans des conteneurs étanches.

Les principaux avantages de la calorimétrie sont les suivants :
- Analyse non destructive (en Anglais : *NDA : Non Destructive Assay*),
- Analyse non intrusive,
- Très bonne précision,
- Fidélité des résultats,
- Possibilité d'analyser des échantillons massifs,
- Résultats indépendants du type de matrice,
- Pas de nécessité d'échantillonnage donc pas de déchets supplémentaires,
- Résultats indépendants de la pression, de la composition chimique, de la distribution et de la présence de matériaux non radioactifs,
- Mesures possibles en phase liquide, gazeuse ou solide.

La calorimétrie est un moyen de mesure très efficace et très précis du tritium du fait qu'il est mono émetteur Beta avec une puissance spécifique de 325 mW/g. Il est alors inutile d'associer la calorimétrie à un autre moyen de mesure pour en déterminer la masse exacte.

En ce qui concerne l'analyse du Plutonium, la calorimétrie, à elle seule, n'est pas suffisante pour déterminer la masse de radioélément contenu dans un échantillon. Cette technique d'analyse doit être associée à de la spectrométrie Gamma et/ou du comptage neutronique afin de déterminer l'isotopie du radioélément.

Ces deux autres techniques sont des références en tant que moyens de mesures et permettent de déterminer, sans détruire l'échantillon, la composition et la masse du produit dans un temps assez court. Le principal inconvénient de ces deux techniques reste la précision de mesure qui se situe entre 10 et 20 %.

L'avantage de la calorimétrie pour l'étude du Plutonium réside donc dans la précision de cette mesure (<1 %).

En ce qui concerne les déchets radioactifs, la calorimétrie est extrêmement importante car sa précision de mesure peut en faire une technique d'analyse essentielle pour les producteurs de déchets.

Actuellement, les fûts de déchets sont classés suivant leur niveau d'activité (faible, moyenne ou haute activité). La calorimétrie a un intérêt particulier dans le domaine des faibles activités pour permettre de déclasser certains déchets ou de les orienter vers les filières de traitement adaptées.

Dans le domaine de la sûreté d'une installation, le stockage des déchets dans un bâtiment ne doit pas dépasser un certain seuil d'activité pour des raisons de sûreté nucléaire. Etant donné que la calorimétrie est une technique très précise qui permet de mesurer l'activité des déchets avec une incertitude très faible, cela permet d'optimiser le nombre de fûts dans un même bâtiment pour un niveau de sûreté donné.

Les calorimètres fonctionnent généralement en mode isotherme selon le classement établi par W. Hemminger et S.M. Sarge, dans l'ouvrage "Definitions, nomenclature, terms and literature, Hand book of Thermal Analysis and Calorimetry, Volume 1, Principles and practice, Series Editor: P. K. Gallagher, Editor: M. E. Brown.

Dans le contexte des déchets radioactifs, des calorimètres sont également décrits dans "Application Guide to Safeguards Calorimetry", D.S. Bracken et. al., January 2002, Los Alamos National Laboratory. Le mode isotherme implique de maintenir à une température constante le cœur de l'appareil quelle que soit la chaleur émise par l'échantillon.

Différents principes de mesure peuvent être utilisés :
- Principe de compensation de chaleur : Détermination de l'énergie nécessaire pour compenser la chaleur dégagée par l'échantillon,
- Principe d'accumulation de chaleur : mesure de la variation de la température provoquée par la chaleur à mesurer,
- Principe d'échange de chaleur : mesure de la différence de température entre l'échantillon et son environnement causée par le flux de chaleur à mesurer.

Il existe en outre deux grands principes de construction :
- Système de mesure simple,
- Système de mesure double ou différentiel.

Le principe de mesure par compensation de chaleur consiste globalement à mesurer la modification de la puissance de régulation nécessaire pour maintenir le calorimètre à température constante, lorsque le calorimètre contient un échantillon actif.

La mesure est basée sur le contrôle et la quantification de l'échange de chaleur entre un bloc thermique qui contient l'échantillon et son environnement.

Le bloc thermique est maintenu à température constante à l'aide d'une puissance de régulation contrôlée. Lorsqu'il ne contient pas d'échantillon actif, la totalité de la chaleur est apportée par la régulation. Lorsqu'il contient un échantillon actif, la chaleur est apportée à la fois par la régulation thermique et par l'échantillon.

La différence d'apport de chaleur, par la puissance de régulation, entre le cas sans échantillon actif et le cas avec échantillon actif est directement liée à la puissance délivrée par l'échantillon (à un facteur de calibration prêt).

La compensation de puissance est réalisée par la mesure de température du bloc thermique en un point donné ou une moyenne de point et en régulant la puissance de chauffe du calorimètre par rapport à cette température.

L'avantage des calorimètres à compensation de chaleur est un temps de mesure plus faible que pour un calorimètre à mesure de flux de chaleur. Le contact thermique direct entre l'échantillon et le bloc thermique (sans transfert de chaleur par des éléments de mesure de flux de chaleur) favorise les échanges de chaleur. Le temps de stabilisation en température de l'échantillon est donc réduit.

Mais cette technologie de mesure présente trois inconvénients majeurs dans le cas de l'étude d'échantillons volumineux et faiblement actifs :
- Les dimensions importantes et les caractéristiques des conteneurs ne permettent pas d'optimiser les flux de chaleur et donc d'obtenir un gain de temps de mesure significatif,
- Des erreurs de mesure non négligeables, selon la localisation de la source dans le conteneur, peuvent être observées. Il n'est pas possible d'obtenir une homogénéisation parfaite de la température de façon isotrope,
- La précision de la mesure pour les faibles puissances et la limite de détection dépendent directement de la précision de la régulation. Il est très difficile d'atteindre des régulations ayant une grande précision et une grande stabilité pour des gammes de puissances importantes nécessaires pour chauffer des volumes de conteneur importants.

La mesure par compensation n'est donc pas adaptée à l'étude calorimétrique de très gros échantillons avec une grande précision de mesure.

La mesure différentielle à mesure de flux est basée sur la mesure de chaleur par des éléments Peltier entourant l'échantillon dans les trois dimensions. Les éléments Peltier sont des éléments sensibles à la chaleur qui créent une tension proportionnelle au flux de chaleur échangé entre l'échantillon et le bloc thermique du calorimètre.

La mesure différentielle utilise une cellule de référence afin de supprimer tous les flux de chaleur parasitant la mesure de la puissance échantillon. Il s'agit des perturbations provenant de la régulation et des perturbations thermiques extérieures (variation jour/nuit de la température de la pièce par exemple).

L'avantage d'un calorimètre différentiel à mesure de flux vient de sa parfaite symétrie et du fait que seule la puissance dégagée par l'échantillon est mesurée. La qualité de la mesure ne dépend donc pas directement de la précision de régulation comme pour une mesure à compensation.

De plus, l'échantillon étant entouré d'éléments Peltier dans les trois dimensions, la chaleur est mesurée par un élément Peltier, quelle que soit la position de la source. Ainsi il n'y a pas d'erreur de mesure selon la localisation de la source.

Cette méthode de mesure est reconnue pour sa précision sur de grande gamme de mesure, allant de quelques microwatts à quelques dizaines de Watt.

Cependant la mesure différentielle présente l'inconvénient d'avoir une cellule de référence qui est très encombrante.

De plus, dans le cas de conteneurs très volumineux, on ne peut pas s'assurer qu'un élément Peltier de référence ressente les mêmes perturbations que l'élément Peltier de mesure associé. Les deux éléments Peltier peuvent être distants de plus d'un mètre, ils ne sont pas en contact avec les mêmes plaques du bloc thermique, ne sont pas à proximité des mêmes éléments chauffants et les fuites thermiques vers l'extérieur à proximité de ces deux éléments Peltier ne sont pas parfaitement identiques. Ils ne ressentent donc pas parfaitement les mêmes flux de chaleur et la mesure différentielle n'est donc plus aussi efficace que sur de plus faibles volumes.

Bien que le mode de mesure différentielle de flux ait prouvé ses performances, il n'est pas parfaitement adapté aux dimensions des très gros échantillons.

### EXPOSÉ DE L'INVENTION

L'invention vise à résoudre les problèmes de la technique antérieure en fournissant un calorimètre différentiel à mesure de flux pour mesurer un flux de chaleur émis par des matières radioactives contenues dans un conteneur,tel que défini dans la revendication principale.

Grâce à l'invention, il est possible de mesurer la puissance thermique d'échantillons contenant des matériaux radioactifs en faible quantité et répartis de façon inhomogène dans un conteneur, qui peut être de grand volume.

Le calorimètre selon l'invention répond aux contraintes d'encombrement liées aux volumes d'échantillon pouvant aller jusqu'à plusieurs centaines de litres. Il permet de mesurer des quantités faibles avec une faible Incertitude.

Selon une caractéristique préférée, le calorimètre différentiel comporte une partie fixe destinée à recevoir le conteneur et une partie mobile destinée à s'assembler avec la partie fixe pour former l'enceinte de réception.

Selon une caractéristique préférée, la partie fixe du calorimètre différentiel comporte l'échantillon de référence, au moins une plaque de référence et au moins une plaque de mesure.

Selon une caractéristique préférée, la partie mobile du calorimètre différentiel comporte au moins une plaque de référence et au moins une plaque de mesure.

### BRÈVE DESCRIPTION DES DESSINS

D'autres caractéristiques et avantages apparaîtront à la lecture d'un mode de réalisation préféré donné à titre d'exemple non limitatif, décrit en référence aux figures dans lesquelles :
- La figure 1 représente une vue schématique en coupe verticale du calorimètre selon la présente invention,
- La figure 2 représente une vue schématique en coupe verticale de la paroi supérieure du calorimètre selon la présente invention, et
- La figure 3 représente une vue schématique en coupe verticale de la partie inférieure du calorimètre selon la présente invention.

### EXPOSÉ DÉTAILLÉ DE MODES DE RÉALISATION PARTICULIERS

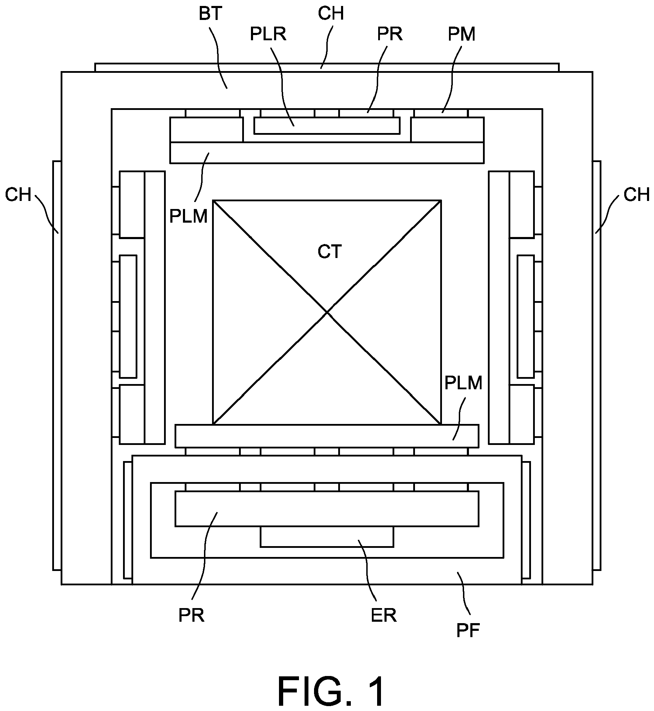

Selon un mode de réalisation préféré décrit en référence à la **figure 1**, le calorimètre comporte une partie fixe PF et une ou des parties mobiles PM qui, une fois positionnée(s) sur la partie fixe forme(nt) une enceinte pour recevoir un conteneur CT contenant des matériaux radioactifs dont on souhaite mesurer le flux de chaleur.

Dans la suite, on décrit les éléments du calorimètre qui sont plus particulièrement d'intérêt dans le cadre de l'invention.

Le calorimètre comporte une cellule de mesure CM, comportant un bloc thermique régulé BT, des éléments Peltier de référence PR et des éléments Peltier de mesure PM. La cellule de mesure comporte des plaques de mesure PLM. La cellule de mesure comporte aussi des éléments chauffants CH et des sondes de température pour réguler le bloc thermique. Le bloc thermique est ainsi à un potentiel stable de température.

Le calorimètre comporte une cellule de référence CR, comportant des plaques de référence PLR et un échantillon de référence ER. La cellule de référence se trouve en quelque sorte cachée par la cellule de mesure.

La partie inférieure du calorimètre constitue la partie fixe PF du calorimètre. Elle comporte l'échantillon de référence ER, surmonté d'une plaque de référence PLR et d'une plaque de mesure PLM.

Au dessus de la partie fixe se trouve l'enceinte de réception du conteneur. L'enceinte est entourée de la partie mobile PM, par exemple formée de deux demi-coquilles qui s'ouvrent pour permettre le positionnement du conteneur dans l'enceinte.

En variante, d'autres structures de parties fixe et mobile sont possibles. Par exemple, la partie fixe comporte le socle et une paroi latérale, et la partie mobile comporte les trois autres parois latérales et la paroi supérieure.

Toutes les parois latérales et la paroi supérieure de l'enceinte comportent les mêmes éléments.

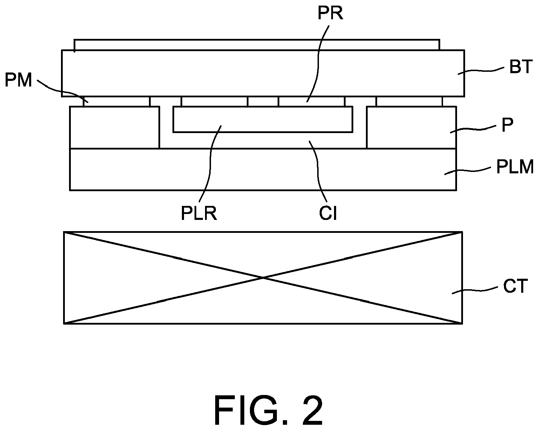

En référence à la **figure 2**, la paroi supérieure est séparée du conteneur CT par une interface d'air. On décrit dans la suite les éléments supportés par la paroi supérieure, depuis l'intérieur vers l'extérieur. A partir de cette interface d'air, la paroi supérieure comporte une plaque de mesure PLM qui reçoit la chaleur dégagée par le conteneur par conduction, convection et radiation dans l'air.

La face de la plaque de mesure PLM qui n'est pas en regard du conteneur comporte des plots P sur chacun desquels sont fixés des éléments Peltier de mesure PM. Le bloc thermique régulé BT est fixé aux éléments Peltier de mesure PM.

Les plots P et les éléments Peltier de mesure PM sont en périphérie de la plaque de mesure PLM. Dans un espace situé entre les plots, la plaque de mesure PLM et le bloc thermique régulé BT, une plaque de référence PLR est fixée à des éléments Peltier de référence PR, eux-mêmes fixés au bloc thermique régulé BT. Cette plaque de référence se trouve ainsi derrière la plaque de mesure par rapport au conteneur lorsqu'il est dans l'enceinte de réception.

Une couche d'isolant CI sépare la plaque de mesure PLM et la plaque de référence PLR. Ainsi, la plaque de référence PLR n'est pas en contact direct avec le conteneur CT. La plaque de référence PLR a pour fonction de :
- simuler la masse calorifique des plaques de mesures,
- être en contact thermique avec le bloc régulé,
- être isolées au maximum de la chaleur provenant du conteneur,
- mesurer les flux de chaleur dus à la régulation et aux perturbations. Enfin un élément chauffant CH est fixé au bloc thermique régulé BT.

Les parois latérales comportent les mêmes éléments que la paroi supérieure.

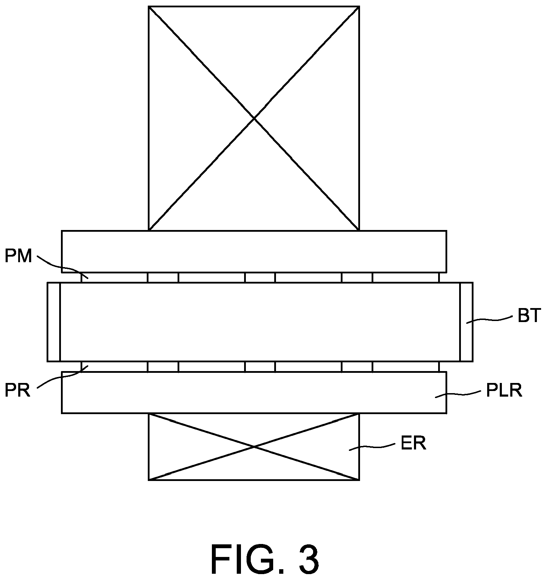

En référence à la **figure 3**, la partie inférieure du calorimètre comporte une plaque de mesure PLM sur laquelle le conteneur est posé. Il y a donc contact entre le conteneur CT et la plaque de mesure PLM.

On décrit dans la suite les éléments de la partie inférieure du calorimètre, depuis l'intérieur vers l'extérieur. Des éléments Peltier de mesure PM sont fixés à la plaque de mesure PLM.

Un bloc thermique régulé BT est fixé aux éléments Peltier de mesure PM par l'une de ses faces.

Des éléments Peltier de référence PR sont fixés au bloc thermique régulé BT sur sa face opposée à celle à laquelle sont fixés les éléments Peltier de mesure PM.

Une plaque de référence PLR est fixée aux éléments Peltier de référence. Cette plaque de référence se trouve ainsi derrière la plaque de mesure par rapport au conteneur lorsqu'il est dans l'enceinte de réception.

Enfin un échantillon de référence ER est fixé à la plaque de référence PLR. L'échantillon de référence se trouve ainsi sous l'enceinte de réception du conteneur.

Le système d'ouverture est composé de demi-coquilles amovibles glissant sur des rails de précision. Les rails permettent d'ouvrir le calorimètre à l'aide d'un système électro mécanique sécurisé. Une fois les deux demi-coquilles écartées, le conteneur peut être installé facilement dans l'enceinte de réception à l'aide d'un chariot élévateur.

La taille du calorimètre est adaptée à la taille des conteneurs pour lesquels on souhaite mesurer le flux de chaleur.

## Revendications

1. Calorimètre différentiel à mesure de flux pour mesurer un flux de chaleur émis par des matières radioactives contenues dans un conteneur (CT), comportant une enceinte de réception pour recevoir le conteneur, un bloc thermique (BT) et une cellule de référence comportant un échantillon de référence (ER) sous l'enceinte de réception,
**Caractérisé en ce qu'**il comporte en outre
- Des plaques de mesure (PLM) réparties autour de l'enceinte de réception du conteneur,
- Des éléments Peltier de mesure (PM) placées derrière les plaques de mesure (PLM) par rapport au conteneur lorsqu'il est dans l'enceinte de réception, les éléments Peltier de mesure étant en outre fixés au bloc thermique,
- Des plaques de référence (PLR) placées derrière les plaques de mesure (PLM) par rapport au conteneur lorsqu'il est dans l'enceinte de réception, les plaques de mesure et les plaques de référence étant séparées par une couche d'isolant (Cl) et les plaques de référence étant fixées au bloc thermique par des élément Peltier de référence (PR).

2. Calorimètre différentiel selon la revendication 1, **caractérisé en ce qu'**il comporte une partie fixe destinée à recevoir le conteneur (CT) et une partie mobile destinée à s'assembler avec la partie fixe pour former l'enceinte de réception.

3. Calorimètre différentiel selon la revendication 2, **caractérisé en ce que** la partie fixe comporte l'échantillon de référence (ER), au moins une plaque de référence (PLR) et au moins une plaque de mesure (PLM).

4. Calorimètre différentiel selon la revendication 2 ou 3, **caractérisé en ce que** la partie mobile comporte au moins une plaque de référence (PLR) et au moins une plaque de mesure (PLM).

## Patentansprüche

1. Flussmessendes Differentialkalorimeter zur Messung eines Wärmeflusses, der von in einem Behälter (CT) enthaltenen radioaktiven Materialien abgegeben wird, enthaltend ein Aufnahmegehäuse zum Aufnehmen des Behälters, einen thermischen Block (BT) und eine Referenzzelle mit einer Referenzprobe (ER) unterhalb des Aufnahmegehäuses,
**dadurch gekennzeichnet, dass** es ferner enthält:
- Messplatten (PLM), die um das Behälteraufnahmegehäuse herum verteilt sind,
- Peltier-Messelemente (PM), die bezüglich des Behälters den Messplatten (PLM) nachgelagert sind, wenn dieser sich in dem Aufnahmegehäuse befindet, wobei die Peltier-Messelemente ferner an den thermischen Block befestigt sind,
- Referenzplatten (PLR), die bezüglich des Behälters den Messplatten (PLM) nachgelagert sind, wenn dieser sich in dem Aufnahmegehäuse befindet, wobei die Messplatten und die Referenzplatten durch eine Isolierschicht (Cl) getrennt sind und die Referenzplatten über Peltier-Referenzelemente (PR) an den thermischen Block befestigt sind.

2. Differentialkalorimeter nach Anspruch 1, **dadurch gekennzeichnet, dass** es einen feststehenden Teil zum Aufnehmen des Behälters (CT) und einen beweglichen Teil zum Zusammenfügen mit dem feststehenden Teil enthält, um das Aufnahmegehäuse zu bilden.

3. Differentialkalorimeter nach Anspruch 2, **dadurch gekennzeichnet, dass** der feststehende Teil die Referenzprobe (ER), mindestens eine Referenzplatte (PLR) und mindestens eine Messplatte (PLM) enthält.

4. Differentialkalorimeter nach Anspruch 2 oder 3, **dadurch gekennzeichnet, dass** der bewegliche Teil mindestens eine Referenzplatte (PLR) und mindestens eine Messplatte (PLM) enthält.

## Claims

1. Differential calorimeter with flux measurement to measure a heat flux emitted by radioactive materials contained in a container (CT), comprising a reception containment to receive the container, a thermal block BT and a reference cell comprising a reference sample (ER) under the reception containment,
**characterised in that** it further comprises
- measurement plates (PLM) distributed around the container reception containment,
- measurement Peltier elements located behind the measurement plates (PLM) from the container when it is in the reception containment, the measurement Peltier elements being further fixed to the thermal block,
- reference plates (PLR) placed behind the measurement plates (PLM) from the container when it is in the reception containment, the measurement plates and the reference plates being separated by an isolating layer (CI) and the reference plates being fixed to the thermal block by reference Peltier elements (PR).

2. Differential calorimeter according to claim 1, **characterised in that** it comprises a fixed part designed to hold the container (CT) and a moving part designed to be assembled with the fixed part to form the reception containment.

3. Differential calorimeter according to claim 2, **characterised in that** the fixed part contains the reference sample (ER), at least one reference plate (PLR) and at least one measurement plate (PLM).

4. Differential calorimeter according to claim 2 or 3, **characterised in that** the moving part comprises at least one reference plate (PLR) and at least one measurement plate (PLM).
